(19) **Europäisches Patentamt**
**European Patent Office**
**Office européen des brevets**

(11) **EP 2 394 320 B1**

(12) **EUROPÄISCHE PATENTSCHRIFT**

(45) Veröffentlichungstag und Bekanntmachung des Hinweises auf die Patenterteilung:
**28.11.2012 Patentblatt 2012/48**

(21) Anmeldenummer: **09768098.7**

(22) Anmeldetag: **15.12.2009**

(51) Int Cl.:
***H01M 2/34*** *(2006.01)*      ***H01M 10/42*** *(2006.01)*
***B60L 11/18*** *(2006.01)*      ***H01M 10/0525*** *(2010.01)*

(86) Internationale Anmeldenummer:
**PCT/EP2009/067141**

(87) Internationale Veröffentlichungsnummer:
**WO 2010/089001 (12.08.2010 Gazette 2010/32)**

(54) **TRAKTIONSBATTERIE MIT ERHÖHTER ZUVERLÄSSIGKEIT**

TRACTION BATTERY HAVING INCREASED RELIABILITY

BATTERIE DE TRACTION À FIABILITÉ ACCRUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.02.2009 DE 102009000682**

(43) Veröffentlichungstag der Anmeldung:
**14.12.2011 Patentblatt 2011/50**

(73) Patentinhaber: **Robert Bosch GmbH**
**70442 Stuttgart (DE)**

(72) Erfinder:
• **BOSCH, Andreas**
**71739 Oberriexingen (DE)**
• **GAEBLER, Sven**
**70499 Stuttgart (DE)**
• **FINK, Holger**
**70567 Stuttgart (DE)**

(56) Entgegenhaltungen:
**EP-A1- 1 566 303      EP-A2- 1 655 166**
**WO-A1-95/35228**

**EP 2 394 320 B1**

**Beschreibung**

Stand der Technik

Die vorliegende Erfindung betrifft eine Batterie, insbesondere ein Traktionsbatterie, gemäß dem Oberbegriff des Patentanspruches 1.

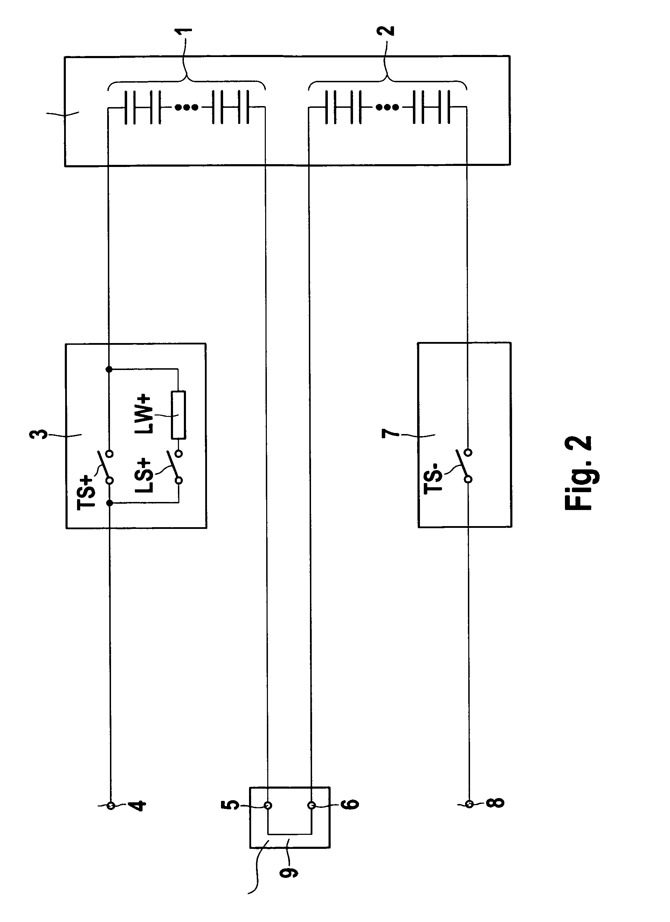

Aus heutiger Sicht werden in Zukunft zunehmend Hybrid- und Elektrofahrzeuge zum Einsatz kommen. In diesen Fahrzeugkonzepten werden an die Batterien ganz andere Anforderungen gestellt, als an die Batterien im heutigen 12V-Bordnetz. In der vorliegenden Beschreibung werden Batterien für den Einsatz in Hybrid- und Elektrofahrzeugen als Traktionsbatterien bezeichnet, da sie für die Speisung elektrischer Antriebe eingesetzt werden. Das Prinzipschaltbild einer derartigen Batterie ist in Figur 2 dargestellt.

Derartige Traktionsbatterien die zwei Batteriezellengruppen umfassen und bei der ein erster Anschluss einer ersten Zellengruppe über eine Trenneinrichtung mit einem ersten Pol der Batterie und ein erster Anschluss der zweiten Zellengruppe über eine andere Trenneinrichtung mit dem zweiten Pol der Batterie verbunden sind, und wobei die beiden zweiten Anschlüsse der ersten und der zweiten Zellengruppe miteinander mittels einer Steckeinrichtung verbunden sind, sind aus den Druckschriften EP 1 566 303 A1 und EP 1 655 166 A2 bekannt.

Um die bei Hybrid- und Elektrofahrzeugen geforderten Leistungs- und Energiedaten zu erzielen, werden einzelne Batteriezellen in Serie und teilweise zusätzlich parallel geschaltet. Eine Traktionsbatterie auf Basis von Li-Ionen-Batteriezellen für den Einsatz in Hybridfahrzeugen könnte z.B. wie folgt aufgebaut sein:

Gesamte Traktionsbatterie:

- Nennspannung: 360V
- Kapazität: 4Ah
- Energie: 1440Wh

Einzelzelle (Li-Ionen):

- Nennspannung: 3,60V
- Kapazität: 4Ah
- Energie: 14,4Wh

Die Batterie besteht aus einer Serienschaltung von 100 Zellen.

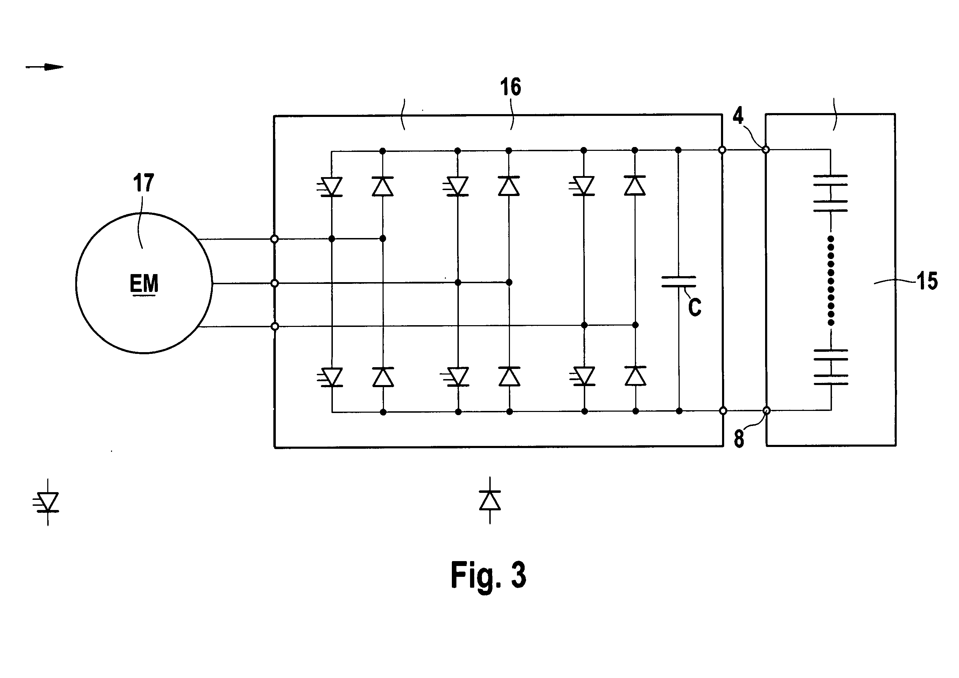

Das Prinzipschaltbild eines Antriebssystems für Hybrid- und Elektrofahrzeuge ist in Figur 3 dargestellt. Der Elektromotor 17 wird über einen Wechselrichter 16 gespeist. Über den Wechselrichter 16 kann - z.B. bei Bremsvorgängen - auch Energie in die Batterie 15 zurückgespeist werden. Der Wechselrichter 16 wird auf seiner Gleichspannungsseite üblicherweise mit einem Glättungskondensator ausgeführt, um die Eingangsspannung zu puffern.

Die in Figur 2 dargestellte Traktionsbatterie weist neben den Batteriezellen noch weitere Funktionsgruppen auf:

- Lade- und Trenneinrichtung 3 am Pluspol 4 der Batterie
- Trenneinrichtung 7 am Minuspol 8 der Batterie
- Service-Stecker 9

Diese Funktionsgruppen haben folgende Aufgaben:

Mit den beiden Trennschaltern in den Trenneinrichtungen am Pluspol 4 und am Minuspol 8 der Traktionsbatterie können die Batteriezellen an beiden Polen abgeschaltet werden. Dies wird auch als zweipolige Abschaltung der Batteriezellen bezeichnet. Damit kann die Batterie im Stillstand oder in sicherheitskritischen Situationen (z.B. bei einem Unfall) vom Traktionsbordnetz des Fahrzeuges abgetrennt und im Fahrbetrieb dem Traktionsbordnetz zugeschaltet werden.

Die Ladeeinrichtung am Pluspol der Batterie hat die Aufgabe, die Ausgleichsströme im Traktionsbordnetz beim Zuschalten der Traktionsbatterie zu begrenzen. Bei einem solchen Zuschaltvorgang werden zunächst der Trennschalter in der Trenneinrichtung 7 am Minuspol 8 der Batterie und der Ladeschalter in der Lade- und Trenneinrichtung 3 am Pluspol der Batterie 4 geschlossen. Der Trennschalter in der Lade- und Trenneinrichtung 3 am Pluspol 4 der Batterie ist zunächst geöffnet. Der Glättungskondensator des Wechselrichters 16 wird somit über den Ladewiderstand der Lade- und Trenneinrichtung 3 am Pluspol 4 der Batterie aufgeladen. Weist die Spannung am Glättungskondensator im Wechselrichter 16 nahezu die Summenspannung der in Reihe geschalteten Batteriezellen auf, wird der Trennschalter in der Lade- und Trenneinrichtung 3 am Pluspol 4 der Batterie geschlossen. Mit dieser Vorgehensweise können die Ausgleichsströme im Traktionsbordnetz so begrenzt werden, dass die Batteriezellen sowie der Glättungskondensator im Wechselrichter 16 nicht mit unzulässig hohen Strömen betrieben werden.

Der Servicestecker 9 muss aus Sicherheitsgründen bei Wartungsarbeiten der Batterie abgezogen werden. Dies kann z.B. dadurch gewährleistet werden, dass das Batteriegehäuse nur geöffnet werden kann, wenn zuvor der Servicestecker 9 abgezogen wurde. Die Batteriezellen werden dadurch sicher einpolig abgetrennt, auch wenn die beiden oben beschriebenen Trennschalter aufgrund einer Fehlfunktion nicht geöffnet haben.

Bei Traktionsbatterien werden deutlich höhere Anforderungen an deren Zuverlässigkeit gestellt, als bei den heute üblichen Starterbatterien. Hintergrund ist, dass z.B. bei einem Elektrofahrzeug ein Ausfall der Traktionsbatterie zu einem sogenannten "Liegenbleiber" führt. Die erforderliche hohe Verfügbarkeit ist bei einer in Figur 2 dargestellten Traktionsbatterie schwer zu realisieren. Ursache dafür ist, dass der Ausfall einer einzigen Batteriezelle zum Ausfall der gesamten Traktionsbatterie führt. Die Ausfallrate einer Batterie mit einer Serienschaltung von Einzelzellen kann wie folgt ermittelt werden:

$$\text{Ausfallrate}_{\text{Traktionsbatterie}} = 1 - (1 - \text{Ausfallrate}_{\text{Zelle}})^{\text{Anzahl Zellen}} \qquad (1)$$

Für eine Traktionsbatterie mit 100 Zellen, die im betrachteten Zeitraum eine Ausfallrate von 100ppm / Zelle aufweist, ergibt sich:

$$\text{Ausfallrate}_{\text{Traktionsbatterie}} = 1 - (1 - 100\text{ppm})^{100}$$
$$= 9{,}95‰ \qquad (2)$$

Bei sehr geringen Ausfallraten der Batteriezellen im betrachteten Zeitraum (z.B. Ausfallrate$_{\text{Zelle}}$ < 1‰) kann die Ausfallrate näherungsweise wie folgt berechnet werden (Abbruch der Potenzreihenentwicklung der Binomischen Reihe nach dem ersten Glied):

$$\text{Ausfallrate}_{\text{Traktionsbatterie}} \approx \text{Anzahl Zellen} * \text{Ausfallrate}_{\text{Zelle}} \qquad (3)$$

Damit ist die Ausfallrate der betrachteten Traktionsbatterie nahezu 100 Mal so hoch wie die Ausfallrate einer einzelnen Zelle. Die Ausfallrate der einzelnen Zellen muss also - bei geforderten Werten für die Ausfallrate der Gesamtbatterie - etwa um den Faktor 100 geringer sein. Wird für eine Gesamtbatterie mit 100 in Serie geschalteten Zellen für einen bestimmten Zeitraum eine Ausfallrate von 100ppm gefordert, müssen die Zellen in diesem Zeitraum eine Ausfallrate von 1 ppm aufweisen. Dies stellt eine extrem schwer zu erfüllende Anforderung dar.

Aufgabe der Erfindung ist es, die Zuverlässigkeit von Traktionsbatterien in Hybrid- und Elektrofahrzeugen zu erhöhen. Dabei soll die Traktionsbatterie dem Traktionsbordnetz noch mit eingeschränkter Leistungsfähigkeit zur Verfügung stehen können.

Offenbarung der Erfindung

Die erfindungsgemäße Vorrichtung mit den Merkmalen des Patentanspruchs 1 weist demgegenüber den Vorteil auf, dass die Traktionsbatterie um einen, vorzugsweise zwei, zusätzliche(n) Überbrückungsschalter erweitert wird, womit jeweils eine Hälfte der Batteriezellen überbrückt werden kann. Dadurch kann bei Ausfall der ersten Zelle die betroffene Halbbatterie 1, 2 abgeschaltet werden. Als Halbbatterien 1, 2 bezeichnet werden dabei jeweils die Serienschaltung der Zellen zwischen dem Pluspol 4 der Batterie und einem ersten Abgang zum Servicestecker (Serviceteckeranschluss) 5 und die Serienschaltung der Zellen zwischen dem Minuspol 8 der Batterie und einem zweiten Servicesteckeranschluss 6. Dem Traktionsbordnetz steht bei Überbrückung einer Halbbatterie noch eine Batterie mit halber Leistungsfähigkeit zur Verfügung. Damit kann ein Liegenbleiber vermieden werden und dem Fahrer signalisiert werden, dass ein Fehler in der Traktionsbatterie aufgetreten ist, der einen Werkstattbesuch erfordert. Vorteil der Erfindung ist somit, dass die Batterie bis zum Auftreten des ersten Zellausfalls betrieben werden kann, ohne die Verfügbarkeit der Batterie zu riskieren. Bei einem Antriebssystem, das beim Ausfall einer Batteriezelle sofort komplett ausfällt, müsste dem Fahrer z.B. eine Batterietauschanzeige bereitgestellt werden, welche auf Basis einer Batteriezustanderkennung und -prädiktion generiert wird. Da derartige Systeme aber die verbleibende Lebensdauer nie exakt bestimmen können, muss die Batterie unnötig früh ausgetauscht werden und es bleibt ein Restrisiko, dass die Batterietauschanzeige den Ausfall der ersten Zelle nicht im Voraus erkennen kann. Mit der vorliegenden Erfindung wird somit zum einen die Zuverlässigkeit der Traktionsbatterie deutlich erhöht. Zum anderen kann die Traktionsbatterie auch länger im Fahrzeug betrieben werden.

Die Unteransprüche zeigen bevorzugte Weiterbildungen der Erfindung.

Besonders bevorzugt umfasst die erfindungsgemäße Batterie eine Ladeeinrichtung, die parallel zu der Trenneinrichtung geschaltet ist. In diesem Fall ist eine Begrenzung der Ausgleichsströme im Traktionsbordnetz auch bei einem Ausfall der ersten Batteriezellengruppe gewährleistet.

Die erfindungsgemäße Vorrichtung umfasst weiter zusätzlich oder alternativ bevorzugt eine erste Erfassungseinrichtung, die eine Funktion der ersten Batteriezellengruppe erfasst und bei einer Fehlfunktion der ersten Batteriezellengruppe ein Öffnen der Verbindung des ersten Anschlusses der ersten Batteriezellengruppe mit dem ersten Batteriepol über die Lade- und Trenneinrichtung und ein Schließen der Verbindung zwischen dem ersten Batteriepol und dem ersten Servicesteckeranschluss über die erste Überbrückungseinrichtung bewirkt, und/oder eine zweite Erfassungseinrichtung, die eine Funktion der zweiten Batteriezellengruppe erfasst und bei einer Fehlfunktion der zweiten Batteriezellengruppe ein Öffnen der Verbindung des zweiten Anschlusses der zweiten Batteriezellengruppe mit dem zweiten Batteriepol über die Trenneinrichtung und ein Schließen der Verbindung zwischen dem zweiten Batteriepol und dem zweiten Servicesteckeranschluss über die zweite Überbrückungseinrichtung bewirkt.

Zeichnung

Nachfolgend wird ein Ausführungsbeispiel der Erfindung unter Bezugnahme auf die begleitende Zeichnung im Detail beschrieben. In der Zeichnung zeigen:

Figur 1    ein Prinzipschaltbild einer Batterie, vorzugsweise Traktionsbatterie, gemäß einer bevorzugten Ausführungsform der Erfindung,

Figur 2    ein Prinzipschaltbild einer Traktionsbatterie nach dem Stand der Technik, und

Figur 3    ein Prinzipschaltbild eines Antriebssystems, das in Hybrid- und Elektrofahrzeugen zum Einsatz kommt.

Bevorzugte Ausführungsformen der Erfindung

Nachfolgend werden unter Bezugnahme auf die Figuren bevorzugte Ausführungsformen der Erfindung im Detail beschrieben.

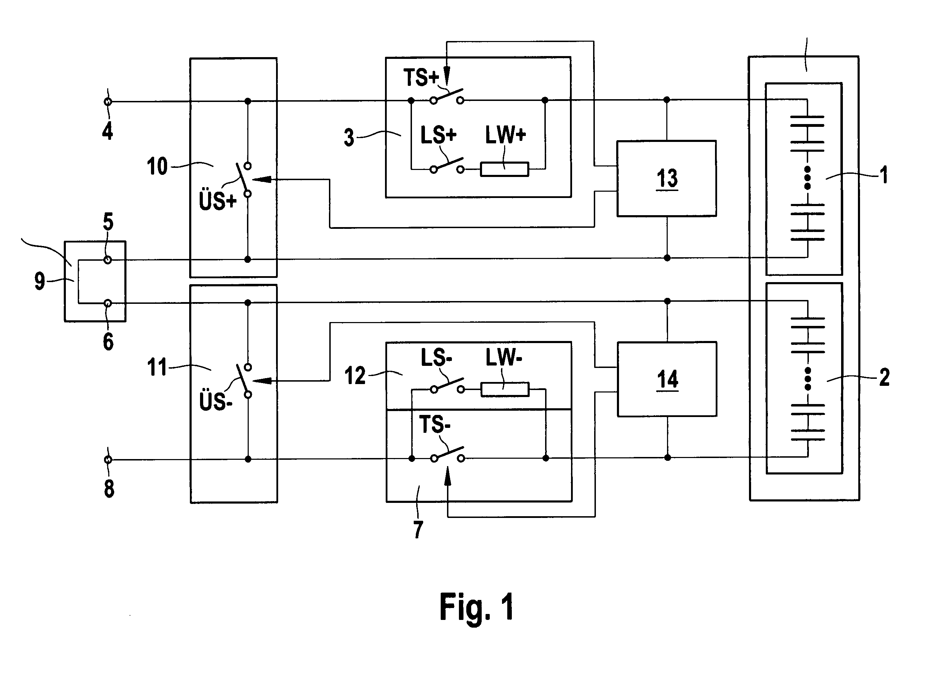

Die Zuverlässigkeit einer Traktionsbatterie wird erfindungsgemäß gegenüber dem Stand der Technik erheblich erhöht, da der Ausfall einer einzelnen Zelle nicht unmittelbar zum Ausfall des Systems (Liegenbleiber) führt. Gemäß einer bevorzugten Ausführung der Erfindung werden zu diesem Zweck - wie in Figur 1 dargestellt - zusätzlich zwei Überbrückungsschalter in zwei Überbrückungseinheiten 10, 11 (am Pluspol 4 und am Minuspol 8 der Batterie) eingeführt. Beim Ausfall der ersten Zelle, welcher beim heutigen Stand der Technik zum Öffnen der beiden Trennschalter führen würde, wird wie folgt vorgegangen:

● Zelle in Halbbatterie am Pluspol fällt aus:

Die Schalter der Lade- und Trenneinrichtung 3 am Pluspol 4 der Batterie werden geöffnet. Dadurch wird die obere Halbbatterie 1 einpolig abgeschaltet. In der Trenneinrichtung 7 am Minuspol 8 der Batterie wird der Trennschalter geöffnet und in der Ladeeinrichtung 12 am Minuspol 8 wird der Ladeschalter geschlossen. Zusätzlich wird der Überbrückungsschalter in der Überbrückungseinheit 10 am Pluspol 4 der Batterie geschlossen. Die obere Halbbatterie 1 wird dadurch überbrückt. Der Glättungskondensator im Wechselrichter 16 wird über den Ladewiderstand der Ladeeinrichtung 12 am Minuspol 8 auf die Summenspannung der Zellen der unteren Halbbatterie 2 auf- bzw. umgeladen.

Weist die Spannung am Glättungskondensator nahezu die Summenspannung der unteren Halbbatterie 2 auf, wird der Trennschalter in der Trenneinrichtung 7 am Minuspol 8 der Batterie geschlossen. Am Pluspol 4 und Minuspol 8 der Traktionsbatterie steht danach eine Batterie mit der halben Spannung und unveränderter Kapazität zur Verfügung. Die Leistung und die Energie der Batterie halbieren sich dadurch gegenüber dem regulären Betrieb.

● Zelle in Halbbatterie am Minuspol fällt aus:

Die Vorgehensweise bei dem Ausfall einer Zelle in der oberen Halbbatterie 1 werden mit vertauschten Rollen der Lade- und Trenneinrichtungen 3; 7, 12, der Überbrückungseinrichtungen 10, 11 und der beiden Halbbatterien 1; 2 analog durchgeführt. Danach steht am Pluspol 4 und Minuspol 8 der Traktionsbatterie wiederum eine Batterie mit der halben Spannung und unveränderter Kapazität zur Verfügung. Die Leistung und die Energie der Batterie halbieren sich wiederum gegenüber dem regulären Betrieb.

Das elektrische Antriebssystem eines Hybrid- oder Elektrofahrzeugs kann bei Einsatz der vorliegenden Erfindung nach dem Ausfall einer Zelle der Traktionsbatterie noch mit halber Leistung und halber Energie betrieben werden. Dadurch kann ein Liegenbleiber aufgrund des Ausfalls einer einzelnen Zelle vermieden werden.

Dieser Vorteil kann dazu genutzt werden, dass die Batterie im Fahrzeug länger betrieben wird, ohne mit hoher Wahrscheinlichkeit einen Liegenbleiber am Ende der Batterielebensdauer zu riskieren.

Die verschiedenen Schalter in den Lade- und Trenneinrichtungen 3; 7, 12 sowie den Überbrückungseinrichtungen 10; 11 können erfindungsgemäß als elektromechanische oder als elektronische Schalter oder als Kombinationen von elektromechanischen und elektronischen Schaltern ausgeführt werden.

Neben der obigen schriftlichen Offenbarung wird hier ausdrücklich auf die Offenbarung in den Figuren verwiesen.

**Patentansprüche**

1.   Batterie, insbesondere Traktionsbatterie, mit einer ersten Batteriezellengruppe (1) und einer zweiten Batteriezellengruppe (2), wobei ein erster Anschluss der ersten Batteriezellengruppe (1) über eine Lade- und Trenneinrichtung (3) mit einem ersten Batteriepol (4) verbunden ist, ein zweiter Anschluss der ersten Batteriezellengruppe (1) mit einem ersten Servicesteckeranschluss (5) verbunden ist, ein erster Anschluss der zweiten Batteriezellengruppe (2) mit einem zweiten Servicesteckeranschluss (6) verbunden ist, und ein zweiter Anschluss der zweiten Batteriezellengruppe (2) über eine Trenneinrichtung (7) mit einem zweiten Batteriepol (8) verbunden ist, wobei der erste Servicesteckeranschluss (5) und der zweite Servicesteckeranschluss (6) über einen externen Servicestecker (9) kurzgeschlossen werden können, **gekennzeichnet durch**

- eine erste Überbrückungseinrichtung (10), die zwischen den ersten Batteriepol (4) und den ersten Servicesteckeranschluss (5) geschaltet ist, über die der erste Batteriepol (4) und der erste Servicesteckeranschluss (5) kurzgeschlossen werden können, und/oder
- eine zweite Überbrückungseinrichtung (11), die zwischen den zweiten Batteriepol (8) und den zweiten Servicesteckeranschluss (6) geschaltet ist, über die der zweite Batteriepol (8) und der zweite Servicesteckeranschluss (6) kurzgeschlossen werden können.

2.   Batterie nach Anspruch 1, **gekennzeichnet durch**

- eine Ladeeinrichtung (12), die parallel zu der Trenneinrichtung (7) geschaltet ist.

3.   Batterie nach Anspruch 1 oder 2, **gekennzeichnet durch**

- eine erste Erfassungseinrichtung (13), die eine Funktion der ersten Batteriezellengruppe (1) erfasst und bei einer Fehlfunktion der ersten Batteriezellengruppe (1) ein Öffnen der Verbindung des ersten Anschlusses der ersten Batteriezellengruppe (1) mit dem ersten Batteriepol (4) über die Lade- und Trenneinrichtung (3) und ein Schließen der Verbindung zwischen dem ersten Batteriepol (4) und dem ersten Servicesteckeranschluss (5) über die erste Überbrückungseinrichtung (10) bewirkt, und/oder
- eine zweite Erfassungseinrichtung (14), die eine Funktion der zweiten Batteriezellengruppe (2) erfasst und bei einer Fehlfunktion der zweiten Batteriezellengruppe (2) ein Öffnen der Verbindung des zweiten Anschlusses der zweiten Batteriezellengruppe (2) mit dem zweiten Batteriepol (8) über die Trenneinrichtung (7) und ein Schließen der Verbindung zwischen dem zweiten Batteriepol (8) und dem zweiten Servicesteckeranschluss (6) über die zweite Überbrückungseinrichtung (11) bewirkt.

**Claims**

1.   Battery, in particular traction battery, having a first battery cell group (1) and a second battery cell group (2), wherein a first terminal of the first battery cell group (1) is connected to a first battery pole (4) via a charging and isolating device (3), a second terminal of the first battery cell group (1) is connected to a first service plug terminal (5), a first terminal of the second battery cell group (2) is connected to a second service plug terminal (6), and a second terminal of the second battery cell group (2) is connected to a second battery pole (8) via an isolating device (7), wherein the first service plug terminal (5) and the second service plug terminal (6) can be short-circuited via an external service plug (9),
**characterized by**

- a first bypass device (10) which is connected between the first battery pole (4) and the first service plug terminal (5) and via which the first battery pole (4) and the first service plug terminal (5) can be short-circuited, and/or
- a second bypass device (11) which is connected between the second battery pole (8) and the second service plug terminal (6) and via which the second battery pole (8) and the second service plug terminal (6) can be short-circuited.

2. Battery according to Claim 1, **characterized by**

- a charging device (12) which is connected in parallel to the isolating device (7).

3. Battery according to Claim 1 or 2, **characterized by**

- a first detection device (13) which detects a function of the first battery cell group (1) and in the event of a malfunction of the first battery cell group (1) brings about opening of the connection of the first terminal of the first battery cell group (1) to the first battery pole (4) via the charging and isolating device (3), and brings about closing of the connection between the first battery pole (4) and the first service plug terminal (5) via the first bypass device (10), and/or
- a second detection device (14) which detects a function of the second battery cell group (2) and in the event of a malfunction of the second battery cell group (2) brings about opening of the connection of the second terminal of the second battery cell group (2) to the second battery pole (8) via the isolating device (7), and brings about closing of the connection between the second battery pole (8) and the second service plug terminal (6) via the second bypass device (11).

## Revendications

1. Batterie, en particulier batterie de traction, présentant un premier groupe (1) de cellules de batterie et un deuxième groupe (2) de cellules de batterie,
une première borne de raccordement du premier groupe (1) de cellules de batterie étant reliée à un premier pôle (4) de batterie par un dispositif (3) de chargement et de séparation,
une deuxième borne de raccordement du premier groupe (1) de cellules de batterie étant raccordée à une première borne (5) de raccordement de fiche de service,
une première borne de raccordement du deuxième groupe (2) de cellules de batterie étant raccordée à une deuxième borne (6) de raccordement d'une fiche de service et une deuxième borne de raccordement du deuxième groupe (2) de cellules de batterie étant raccordée à un deuxième pôle (8) de la batterie par un dispositif de séparation (7),
la première borne (5) de raccordement de fiche de service et la deuxième borne (6) de raccordement de fiche de service pouvant être mises en court-circuit par une fiche externe de service (9),
**caractérisée par**
un premier dispositif de pontage (10) qui est raccordé entre le premier pôle (4) de la batterie et la première borne de raccordement (5) de fiche de service
et par lequel le premier pôle (4) de la batterie et la première borne de raccordement (5) de fiche de service peuvent être mis en court-circuit et/ou
par un deuxième dispositif de pontage (11) raccordé entre le deuxième pôle (8) de la batterie et la deuxième borne (6) de raccordement de fiche de service et par lequel le deuxième pôle (8) de la batterie et la deuxième borne (6) de raccordement de fiche de service peuvent être mis en court-circuit.

2. Batterie selon la revendication 1, **caractérisée par** un dispositif de chargement (12) raccordé en parallèle au dispositif de séparation (7).

3. Batterie selon les revendications 1 ou 2, **caractérisée par** un premier dispositif de détection (13) qui détecte le fonctionnement du premier groupe (1) de cellules de batterie et qui, en cas de défaut de fonctionnement du premier groupe (1) de cellules de batterie, a pour effet une ouverture de la liaison entre la première borne de raccordement du premier groupe (1) de cellules de batterie avec le premier pôle (4) de la batterie par l'intermédiaire du dispositif (3) de chargement et de séparation et la fermeture de la liaison entre le premier pôle (4) de la batterie et la première borne (5) de raccordement de fiche de service par l'intermédiaire du premier dispositif de pontage (10) et/ou un deuxième dispositif de détection (14) qui détecte le fonctionnement du deuxième groupe (2) de cellules de batterie et qui, en cas de défaut de fonctionnement du deuxième groupe (2) de cellules de batterie, a pour effet l'ouverture de la liaison entre la deuxième borne de raccordement du deuxième groupe (2) de cellule de batterie et le deuxième pôle (8) de la batterie par l'intermédiaire du dispositif de séparation (7) et la fermeture de la liaison entre le deuxième pôle (8) de la batterie et la deuxième borne (6) de raccordement de fiche de service par l'intermédiaire du deuxième dispositif de pontage (11).

Fig. 1

EP 2 394 320 B1

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1566303 A1

- EP 1655166 A2